# EUROPEAN PATENT APPLICATION

(11) **EP 1 161 048 A2**
(43) Date of publication of application: **05.12.2001**
(21) Application number: 01111875.9
(22) Date of filing: 16.05.2001
(51) Int. Cl.: H04L 29/06

(54) **System and method for secure duplex browser communication over disparate networks**

(30) Priority: 19.05.2000 US 575330
(71) Applicant: Attachmate Corporation, Bellevue, Washington 98006 (US)
(72) Inventor: Hardwick, Brian Keith, West Harrison, Indiana 47060 (US); Towne, Calvin David, Franklin, Ohio 45005 (US)
(74) Representative: Grünecker, Kinkeldey, Stockmair & Schwanhäusser Anwaltssozietät

(57) **Abstract**

A system and method for secure duplex browser communication over disparate networks provides duplex communication between applications such as a browser program running on a client computer system and server applications running on a server computer system. Standard web-based protocols used with the duplex communication allow use of built-in browser program features such as related to security and navigation that would otherwise be specially provided. Given the request-response nature of many of the standard web-based protocols, use of standard web-based protocols for duplex communication has not been readily attainable in the past. A duplex transport system to provide the duplex communication includes a client component running on the client computer system and a server component running on the server computer system. The browser program controls one or more browser applications configured to run on the client computer system. One or more instances of the client component and one or more instances of the server component are run to form one or more sessions each having session identifiers. Each session has one or more data pipes, which are sub-sessions. A particular data pipe has a pipe identifier and provides two independent data paths of duplex data traffic between the browser applications that are communicatively linked to the instance of the client component and the server applications communicatively linked to the instance of the server component that are both associated with the respective session of the particular data pipe. Messages of the duplex data traffic contain both session and data pipe identifiers.

## Description

### TECHNICAL FIELD

The invention relates generally to distributed computing environments, and more particularly to a server-client environment involving a system and method to maintain secure duplex communication between browser-based applications on client computers and server applications on server computers.

### BACKGROUND OF THE INVENTION

To take advantage of a distributed computing environment, many current applications are being distributed between client and server computers. The client computers include browser-based applications that communicate over networks with server applications running on the server computers. The browser user interfaces have become popular given their added features to improve usability of the server applications. Some of these server applications would be enhanced by or necessitate duplex communication between the browser-based applications and the server applications where simultaneous two-way communication occurs in both directions between the client and server computers. Requirements also exist for duplex communication over unsecured networks such as the Internet with enhanced security such as provided by security enhanced protocols. Furthermore, duplex communication is desirable in situations involving disparate networks comprised of non-secure networks, separately administered, and security-protected networks, such as in cases where multiple firewalls and proxy servers must be navigated.

Conventional attempts to address the need for duplex communication between browser-based applications and server applications have been discouragingly inadequate. The communication mechanisms of the browser-based applications including HTTP (Hypertext Transfer Protocol) and HTTPS (Hypertext Transfer Protocol Secure) use a request-response communication scheme that is not conducive to duplex communication. Consequently, conventional attempts have focused on alternative duplex communication between the browser-based applications and the server applications that utilize non-standard web-based mechanisms and protocols.

Unfortunately, the alternative non-standard web-based duplex communication forfeits important browser user interface features such as firewall/proxy navigation features of HTTP including the proxy configuration of the browser, HTTP authentication, Internet security features of associated protocols such as Secure Sockets Layer/Transport Layer Security (SSL/TLS), and access to client certificates such as used in SSL/TLS. As a result, additional client code must be downloaded and configured to compensate for lost functionality. In turn, client download times are substantially increased. Management issues are also complicated when many different client network configurations are being supported. Security issues are also made more difficult such as when access to client certificates requires platform-specific code.

### SUMMARY OF THE INVENTION

The present invention resides in a method and system for secure duplex browser communication over disparate networks. Aspects of the method and system include a transport system for use with a client computer system and a server computer system. The client computer system and the server computer system are communicatively linked to a network system. The duplex transport system includes a browser program, one or more browser applications, one or more server applications, a client component, a server component, one or more sessions, and one or more data pipes.

Further aspects include the browser program being configured to run on the client computer system and has built-in features associated with communication protocols used by the duplex transport system. The one or more browser applications are configured to run on the client computer system under control of the browser program. The one or more server applications are configured to run on the server computer system.

Additional aspects include the client component being configured to run as one or more instances on the client computer system. Each instance of the client component is communicatively linked to one of the browser applications. The server component is configured to run as one or more instances on the server computer system. Each instance of the server component is communicatively linked to one of the server applications.

Regarding, the one or more sessions, aspects include each session having a session identifier and is an association between one of the instances of the client component and one of the instances of the server component. Regarding the one or more data pipes, aspects also include each data pipe being a sub-session of one of the sessions and has a pipe identifier. Furthermore, each data pipe is configured to provide two independent data paths between the browser application communicatively linked to the instance of the client component associated with the session of the data pipe and the server application communicatively linked to the instance of the server component associated with the session of the data pipe.

### BRIEF DESCRIPTION OF THE DRAWINGS

Figure 1 is a block diagram of a computing system suitable for employing aspects of the invention for secure, duplex browser communication.

Figure 2 is a block diagram illustrating detail of the client and server computers used in the depicted embodiment of the present invention.

Figure 3 is a flowchart detailing actions involved in establishing a communication session used in the depicted embodiment.

Figures 4 - 7 are communication diagrams illustrating implementations for upstream and downstream components of data pipes used in the depicted embodiment.

### DETAILED DESCRIPTION OF THE INVENTION

A browser communication system and related method for secure, duplex browser communication over disparate networks is described. In the following description, numerous specific details are provided to provide a thorough understanding of embodiments of the invention. One skilled in the relevant art, however, will recognize that the invention can be practiced without one or more of these specific details, or with other equivalent elements and components, etc. In other instances, well-known components and elements are not shown, or not described in detail, to avoid obscuring aspects of the invention or for brevity.

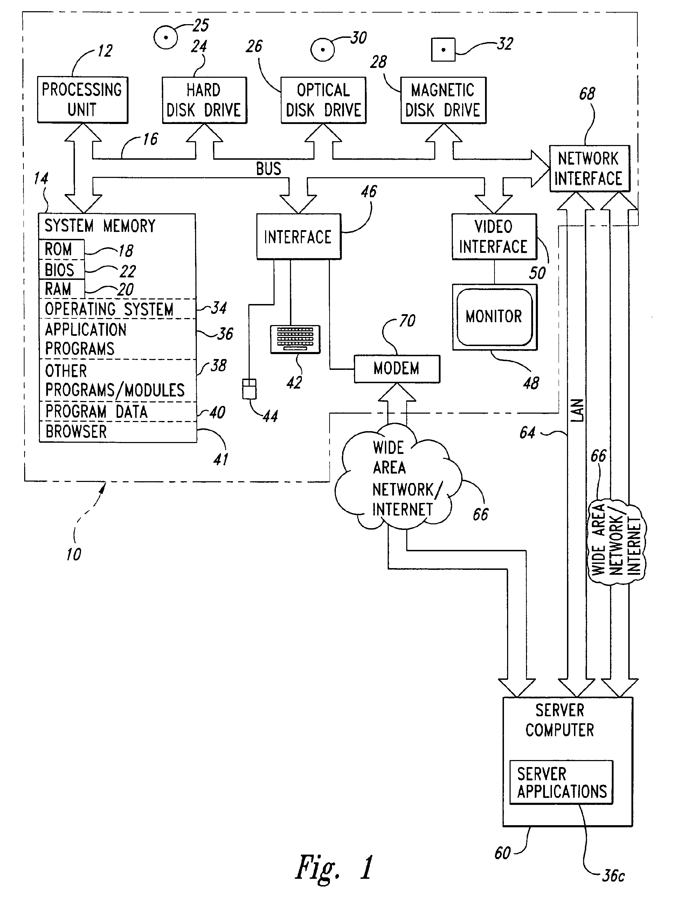

Figure 1 and the following discussion provide a brief, general description of a suitable computing environment in which the invention can be implemented. Although not required, embodiments of the invention will be described in the general context of computer-executable instructions, such as program application modules, objects, or macros being executed by a personal computer. Those skilled in the relevant art will appreciate that the invention can be practiced with other computer system configurations, including hand-held devices, multiprocessor systems, microprocessor-based or programmable consumer electronics, network PCs, mini computers, mainframe computers, and the like. The invention can be practiced in distributed computing environments where tasks or modules are performed by remote processing devices, which are linked through a communications network. In a distributed computing environment, program modules may be located in both local and remote memory storage devices.

Referring to Figure 1, a conventional personal computer referred herein as a client computer 10 includes a processing unit 12, a system memory 14 and a system bus 16 that couples various system components including the system memory to the processing unit. The processing unit 12 may be any logic processing unit, such as one or more central processing units (CPUs), digital signal processors (DSPs), application-specific integrated circuits (ASIC), etc. Unless described otherwise, the construction and operation of the various blocks shown in Figure 1 are of conventional design. As a result, such blocks need not be described in further detail herein, as they will be understood by those skilled in the relevant art.

The system bus 16 can employ any known bus structures or architectures, including a memory bus with memory controller, a peripheral bus, and a local bus. The system memory 14 includes read-only memory ("ROM") 18 and random access memory ("RAM") 20. A basic input/output system ("BIOS") 22, which can form part of the ROM 18, contains basic routines that help transfer information between elements within the client computer 10, such as during start-up.

The client computer 10 also includes a hard disk drive 24 for reading from and writing to a hard disk 25, and an optical disk drive 26 and a magnetic disk drive 28 for reading from and writing to removable optical disks 30 and magnetic disks 32, respectively. The optical disk 30 can be a CD-ROM, while the magnetic disk 32 can be a magnetic floppy disk or diskette. The hard disk drive 24, optical disk drive 26 and magnetic disk drive 28 communicate with the processing unit 12 via the bus 16. The hard disk drive 24, optical disk drive 26 and magnetic disk drive 28 may include interfaces or controllers (not shown) coupled between such drives and the bus 16, as is known by those skilled in the relevant art. The drives 24, 26 and 28, and their associated computer-readable media, provide nonvolatile storage of computer readable instructions, data structures, program modules and other data for the client computer 10. Although the depicted client computer 10 employs hard disk 25, optical disk 30 and magnetic disk 32, those skilled in the relevant art will appreciate that other types of computer-readable media that can store data accessible by a computer may be employed, such as magnetic cassettes, flash memory cards, digital video disks ("DVD"), Bernoulli cartridges, RAMs, ROMs, smart cards, etc.

Program modules can be stored in the system memory 14, such as an operating system 34, one or more application programs 36, other programs or modules 38 and program data 40. The system memory 14 also includes a browser 41 for permitting the client computer 10 to access and exchange data with sources such as web sites of the Internet, corporate intranets, or other networks as described below, as well as other server applications on server computers such as those further discussed below. The browser 41 is markup language based, such as Hypertext Markup Language (HTML) and operates with markup languages that use syntactically delimited characters added to the data of a document to represent the structure of the document.

While shown in Figure 1 as being stored in the system memory 14, the operating system 34, application programs 36, other programs/modules 38, program data 40 and browser 41 can be stored on the hard disk 25 of the hard disk drive 24, the optical disk 30 of the optical disk drive 26 and/or the magnetic disk 32 of the magnetic disk drive 28. A user can enter commands and information into the client computer 10 through input devices such as a keyboard 42 and a pointing device such as a mouse 44. Other input devices can include a microphone, joystick, game pad, scanner, etc. These and other input devices are connected to the processing unit 12 through an interface 46 such as a serial port interface that couples to the bus 16, although other interfaces such as a parallel port, a game port or a universal serial bus ("USB") can be used. A monitor 48 or other display device is coupled to the bus 16 via a video interface 50, such as a video adapter. The client computer 10 can include other output devices, such as speakers, printers, etc.

The client computer 10 can operate in a networked environment using logical connections to one or more remote computers, such as a server computer 60. The server computer 60 can be another personal computer, a server, or other type of computer, and typically includes many or all of the elements described above for the client computer 10. The server computer 60 is logically connected to one or more of the client computers 10 under any known method of permitting computers to communicate, such as through a local area network ("LAN") 64 or a wide area network ("WAN") or the Internet 66. Such networking environments are well known in enterprise-wide computer networks, intranets, extranets, and the Internet.

When used in a LAN networking environment, the client computer 10 is connected to the LAN 64 through an adapter or network interface 68 (communicatively linked to the bus 16). When used in a WAN networking environment, the client computer 10 often includes a modem 70 or other device, such as the network interface 68, for establishing communications over the WAN/Internet 66. The modem 70 is shown in Figure 1 as communicatively linked between the interface 46 and the WAN/Internet 66. In a networked environment, program modules, application programs, or data, or portions thereof, can be stored in the server computer 60. In the depicted embodiment, the client computer 10 is communicatively linked to the server computer through the LAN 64 or WAN/Internet 66 with TCP/IP middle layer network protocols and Hypertext Transfer Protocol Secure (HTTPS) upper layer network protocols; however, other similar network protocol layers are used in other embodiments. Those skilled in the relevant art will readily recognize that the network connections shown in Figure 1 are only some examples of establishing communication links between computers, and other links may be used, including wireless links.

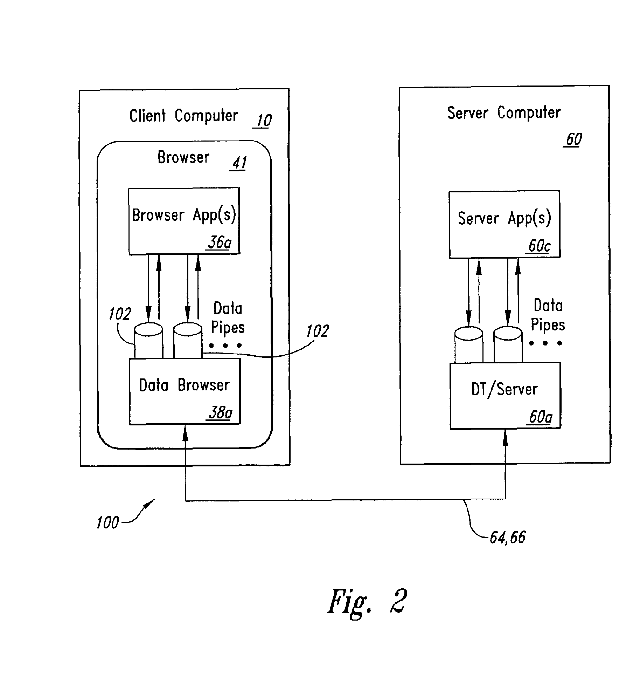

As shown in Figure 2, the depicted embodiment of the present invention is a duplex transport system 100 allowing the browser 41 running on the client computer 10 to conduct secure, duplex network communications over networks such as the WAN/Internet 66 with server applications 60c running on the server computer 60. The browser 41 controls browser applications 36a that are used by the browser in conjunction with the duplex transport system 100. These browser applications 36a involve software languages and processes such as Java applets, ActiveX, JavaScript, VBScript procedures, etc. The server applications 60c include general and specific purpose software providing desired functionality to users of the client computer 10. Alternative embodiments involve other types of applications running on the client computer 10 other than the browser 41 for duplex communication with applications running on other server computers 60. The alternative embodiment client applications other than the browser 41 utilize utility applications similar to the browser applications 36a.

The duplex transport system 100 includes a client component, DT/Browser 38a, running on the client computer 10 as one of the other programs 38. The duplex transport system 100 further includes a server component, DT/Server 60a, running on the server computer 60. The DT/Browser 38a and the DT/Server 60a are linked across the WAN/Internet 66. The DT/Browser 38a and the DT/Server 60a of the duplex transport system 100 establishes one or more data pipes 102 between one or more of the browser applications 36a and one or more of the server applications 60c for secure, duplex communication. Each of the data pipes 102 between one of the browser applications 36a and one of the server applications 60c includes two independent data paths that allow for concurrent sending and receiving of data between the browser application and the server application.

The duplex transport system 100 allows standard features and mechanisms to be readily available for communication between the browser applications 36a and the server applications 60c. For instance, communication uses uniform resource locators (URLs), which is an Internet and web-based addressing standard. Other standard features and mechanisms readily available include firewall/proxy navigation features of Hypertext Transfer Protocol (HTTP) including the browser's 41 proxy configuration, HTTP authentication, standard Internet non-secure and secure protocols such as Transmission Control Protocol/Internet Protocol (TCP/IP), Secure Sockets Layer/Transport Layer Security (SSL/TLS), HTTP Secure (HTTPS) and Internet Protocol Secure (IPSEC), and access to client certificates for use with security protocols.

By facilitating use of standard web-based protocols and other standard mechanisms, the duplex transport system 100 further allows use of the built-in functionality of the browser 41 as opposed to conventional duplex systems that do not facilitate use of standard web-based protocols and other standard mechanisms. As mentioned, the conventional communication systems must replace lost browser functionality through duplicative efforts due to their avoidance of HTTPS and other standard web-based protocols. These duplicative efforts of the conventional systems are unnecessary with the duplex transport system 100.

In the depicted embodiment the duplex transport system 100 requires execution of the browser applications 36a within and under control of the browser 41 as an HTTP client, the operating environment of the client computer 10, or a virtual machine. In the depicted embodiment, the DT/Browser 38a and the DT/Server 60a communicate using the HTTP. Security features utilized by the depicted embodiment include those specified by Internet and World Wide Web (WWW) standards organizations, such as SSL/TLS and IPSEC.

Other embodiments of the duplex transport system 100 utilize other request-response type protocols, other compatible security protocols and media for communication, and/or the same and/or other protocols approved by communications standards organizations including but not limited to such standards organizations as the International Telecommunications Union (ITU) including such committees as the Telecommunications, and the Telecommunications Standards Sector committee, and the Internet Architecture Board including such task forces as the Internet Engineering Task Force and the Internet Research Task Force.

All communication between the browser applications 36a and one of the server applications 60c is conducted through one of the data pipes 102. A DT Session is an association between an instance of the DT/Browser 38a and an instance of the DT/Server 60a. The server computer 60 can support one or more concurrent instances of the DT/Server 60a having associations through DT Sessions with one or more instances of the DT/Browser 38a existing on one or more of the client computers 10. Creation of the data pipes 102 are dependent upon creation of one or more DT Sessions.

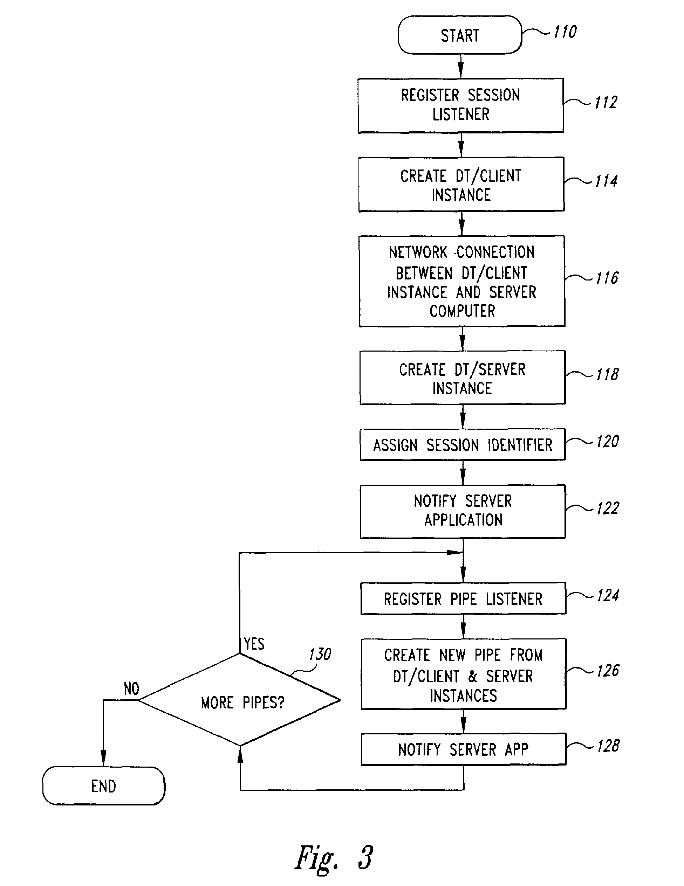

The process of creating a DT Session starts with one of the server applications 60c registering a Session Listener callback function with the DT/Server 60a (step 112 of Figure 3). Based upon some initiating action on the client computer 10, one of the browser applications 36a creates an instance of the DT/Browser 38a to run on the client computer (step 114). Subsequently, the DT/Browser 38a establishes communication over the WAN/Internet 66 with a daemon running on the server computer 60 (step 116), which consequently causes creation of an instance of the DT/Server 60a to run on the server computer 60 (step 118). A Session Identifier that is unique to the particular DT Session is assigned (step 120) to be used in managing each DT Session created because DT Sessions may be multiplexed through a single network socket resource. The server application 60c that registered the Session Listener is then notified of the new instance of the DT/Server 60a (step 122).

Each DT Session provides one or more of the data pipes 102, which are independent duplex sub-sessions. Upon creation, each DT Session provides a first data pipe 102 referred to as the primary pipe. If more of the data pipes 102 are required, either one of the browser applications 36a or one of the server applications 60c submits requests with respect to the particular DT Session involved. To create more of the data pipes 102 in addition to the primary pipe for a particular DT Session, the server application 60c associated with the particular DT Session registers a Pipe Listener callback function with the DT/Server instance of the particular DT Session (step 124). When the browser application 36a of the particular DT Session create an instance of the data pipe 102 from the associated DT/Browser instance, a corresponding instance of the data pipe 102 from the associated DT/Server instance is also created (step 126), and the associated server application 60c is notified through the Pipe Listener callback function (step 128). Alternatively, a DT/Server instance can initiate the data pipe 102 through steps 124, 126, and 128. As a result of a DT/Server instance initiating a data pipe 102, an associated DT/Browser instance is created. If more pipes are required (yes in step 130), the procedure is repeated starting with registering another Pipe Listener (step 124). Otherwise, the procedure ends if no more pipes are required. Pipes may be closed and new ones created at any time while the DT Session is active.

Each of the data pipes 102 is assigned a Pipe Identifier that is unique to its associated DT Session. The Pipe Identifier is important because every request and reply message as part of request-reply communication between associated instances of the DT/Browser 38a and the DT/Server 60a carries multiplexed pipe traffic. Each request - reply carries message parameters including the Pipe Identifier and a Pipe Sequence Number, which identifies order sequence of messages within a particular one of the data pipes 102. The Pipe Sequence Number is used for matching requests and replies for overlapped requests (discussed further below).

The duplex transport system 100 includes three browser functions to be used with the data pipes 102 associated with the instance of the DT/Browser 38a and three server functions to be used with the data pipes 102 associated with the instance of the DT/Server 60a. The three browser functions include Browser Write, Browser Read (synchronous), and Browser Receive (asynchronous). In alternative embodiments having client applications involving duplex communication with other server applications, similar write, read, and receive functions would be utilized by the client applications. Under Browser Write, one of the browser applications 36a presents its data buffer and length. Control returns to the browser application 36a either after data has been placed in an outgoing buffer of the data pipe 102 of the associated instance of the DT/Browser 38a, after the data has been sent to the data pipe 102 of the associated instance of the DT/Server 60a, or after a reply has been received from the data pipe 102 of the associated instance of the DT/Server 60a.

Under Browser Read (synchronous), one of the browser applications 36a presents its data buffer for reading and its buffer maximum length. Data is placed in the data buffer of the browser application 36a and control returned to the browser application either when data is received from the data pipe 102 of the associated instance of the DT/Server 60a or when data exists in the incoming buffer of the data pipe 102 of the associated instance of the DT/Browser 38a. Under Browser Receive (asynchronous), one of the browser applications 36a registers a callback function when the associated instance of the DT/Browser 38a is created. Whenever data is received from the data pipe 102 of the associated instance of the DT/Server 60a, this callback function is invoked thereby passing the received data.

The three server functions include Server Write, Server Read (synchronous), and Server Receive (asynchronous). Under Server Write, one of the server applications 60c presents its data buffer and length. Control returns to the server application 60c either after data has been placed in an outgoing buffer of the data pipe 102 of the associated instance of the DT/Server 60a, or has been sent to the data pipe 102 of the associated instance of the DT/Browser 38a. Under Server Read (synchronous), one of the server applications 60c presents its data buffer for reading and its buffer maximum length. Data is placed in the data buffer of the server application 60c and control returned to the server application either when data exists in the incoming buffer of the data pipe 102 of the associated instance of the DT/Server 60a or when data is received from the data pipe 102 of the associated instance of the DT/Browser 38a. Under Server Receive (asynchronous) one of the server applications 60c registers a callback function when the associated instance of the DT/Server 60a is created. Whenever data is received from the data pipe 102 of the associated instance of the DT/Browser 38a, this callback function is invoked thereby passing the received data.

The duplex transport system 100 performs duplex communication and consequently provides two independently operating data paths for each of the data pipes 102. Associated with these independently operating data paths the data pipes 102 of both the DT/Browser 38a and the DT/Server 60a have an upstream component providing client-to-server single direction data flow and a downstream component providing server-to-client single direction data flow. There are variations in how both the upstream and downstream components can be implemented. The upstream components of the data pipes 102 of the DT/Browser 38a and the DT/Server 60a have basic and overlapped implementation variations and the downstream components of the data pipes 102 of the DT/Browser 38a and the DT/Server 60a have basic and read-ahead implementation variations. The depicted embodiment of the duplex transport system 100 is configured to accommodate any or all of these implementation variations of the upstream and downstream components. Alternative embodiments can implement further variations. The following discussion of data flow is applicable to operating DT Sessions and data pipes 102.

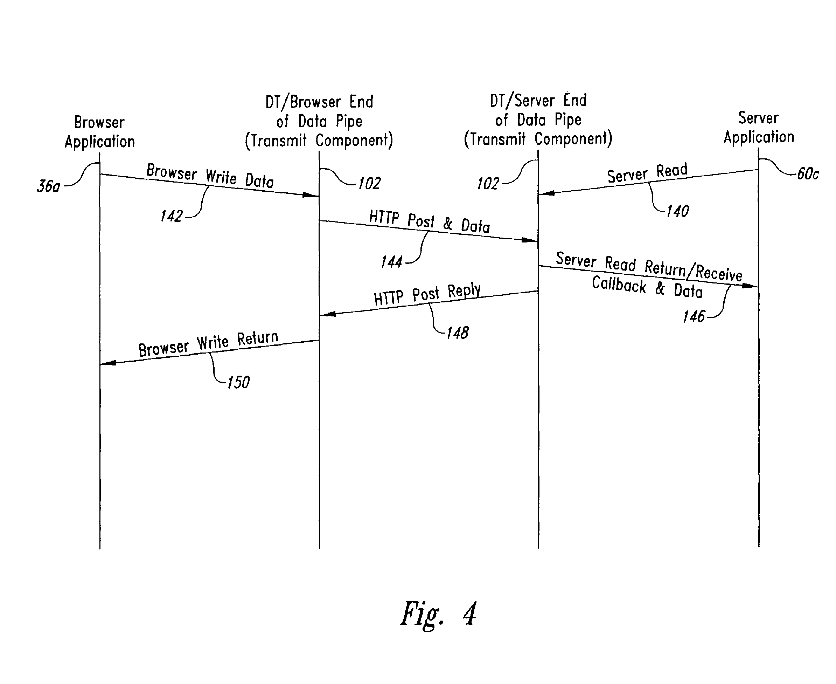

For client-to-server single direction data flow, the upstream components of the data pipes 102 of the DT/Browser 38a and the DT/Server 60a have an upstream basic implementation and an upstream overlapped implementation. The upstream basic implementation starts when one of the server applications 60c that is associated with a particular DT Session prepares to receive data from one of the browser applications 36a that is associated with the same particular DT Session by invoking the Server Read function and presenting the data buffer of the server application to the upstream component of the associated data pipe 102 of the associated instance of the DT/Server 60a (communication 140 of Figure 4).

Next, one of the browser applications 36a performs a Browser Write where the browser application writes data to the upstream component of the associated data pipe 102 of the associated instance of the DT/Browser 38a (communication 142). Consequently, the associated instance of the DT/Browser 38a sends an HTTP Post along with the Browser Write data to the associated instance of the DT/Server 60a (communication 144). The associated instance of the DT/Server 60a then sends either a Server Read Return or a Server Receive Callback along with the Browser Write data to the associated server application 60c (communication 146), which returns control to the server application along with providing the Browser Write data.

The associated instance of the DT/Server 60a also sends an HTTP Post Reply to the associated instance of the DT/Browser 38a (communication 148). If a Server Read (synchronous) is not outstanding when data arrives at the associated instance of the DT/Server 60a, the data is buffered. A buffer full condition will block the HTTP Post Reply in communication 148 until the data is sent to the associated instance of the server application 60c to relieve the buffer of the associated instance of the DT/Server 60a. Consequently, the associated instance of the DT/Browser 38a sends a Browser Write Return to the associated browser application 36a (communication 150), which returns control to the browser application.

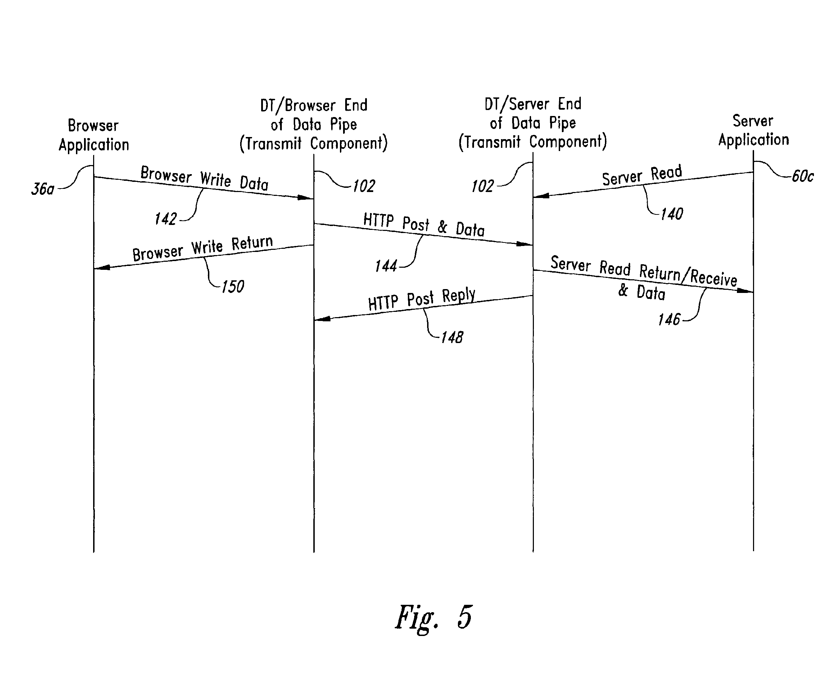

The upstream overlapped implementation (Figure 5) differs from the upstream basic implementation (Figure 4) having an order of communication somewhat altered. The order of communication for the upstream basic implementation is 140, 142, 144, 146, 148, and 150 as shown in Figure 4, whereas the order of communication for the upstream overlapped implementation is 140, 142, 144, 150, 146, and 148 as shown in Figure 5. With the upstream basic implementation (Figure 4) the Browser Write Return is not sent to the associated browser application 36a (communication 150) thereby completing the Browser Write operation until after the HTTP Post reply has been received (communication 148).

In the upstream overlapped implementation (Figure 5) a more immediate Browser Write Return (communication 150) allows additional Browser Write Data calls (communication 142) and resulting HTTP Post requests (communication 144) to occur before the associated instance of the DT/Browser 38a receives the initial HTTP Post Reply (communication 148) causing overlapping. Pipe Sequence Numbers are used for tracking the HTTP requests and replies and are particularly helpful with the overlapping of the upstream overlapped implementation.

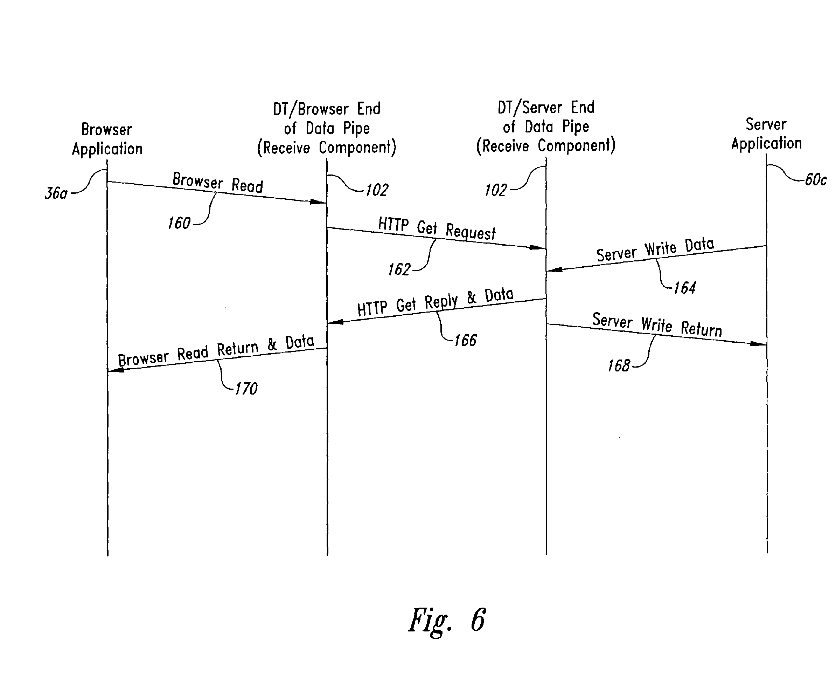

For server-to-client single direction data flow, the downstream components of the data pipes 102 of the DT/Browser 38a and the DT/Server 60a have a downstream basic implementation and a downstream read-ahead implementation. The downstream basic implementation starts when one of the browser applications 38a that is associated with a particular DT Session prepares to receive data from one of the server applications 60c that is associated with the same particular DT Session by invoking the Browser Read function and presenting the data buffer of the browser application to the downstream component of the data pipe 102 of the instance of the DT/Browser 38a associated with the particular DT Session (communication 160 of Figure 6).

Next the associated instance of the DT/Browser 38a sends an HTTP Get Request to the instance of the DT/Server 60a associated with the particular DT Session (communication 162). If no data is available at the instance of the DT/Server 60a associated with the particular DT Session from the associated server application 60c when the associated instance of the DT/Server 60a receives the HTTP Get Request, a timer is started with a Get Timeout value. If the timer expires before any data is available, an HTTP Get Reply with no data is sent back to the associated instance of the DT/Browser 38a causing the associated instance of the DT/Browser to re-send the HTTP Get Request. This refresh cycle is intended to keep the browser from timing out and closing the connection prematurely.

In the case illustrated in Figure 6, the associated server application 60c sends data to the data pipe 102 of the associated instance of the DT/Server 60a with a Server Write (communication 164) before timer expiration. The associated instance of the DT/Server 60a then sends a HTTP Get Reply with the data to the associated instance of the DT/Browser 38a (communication 166) and returns control to the associated server application 60c with a Server Write Return (communication 168). The data pipe 102 of the associated instance of the DT/Browser 38a then returns control to the associated browser application 36a along with the data with a Browser Read Return (communication 170).

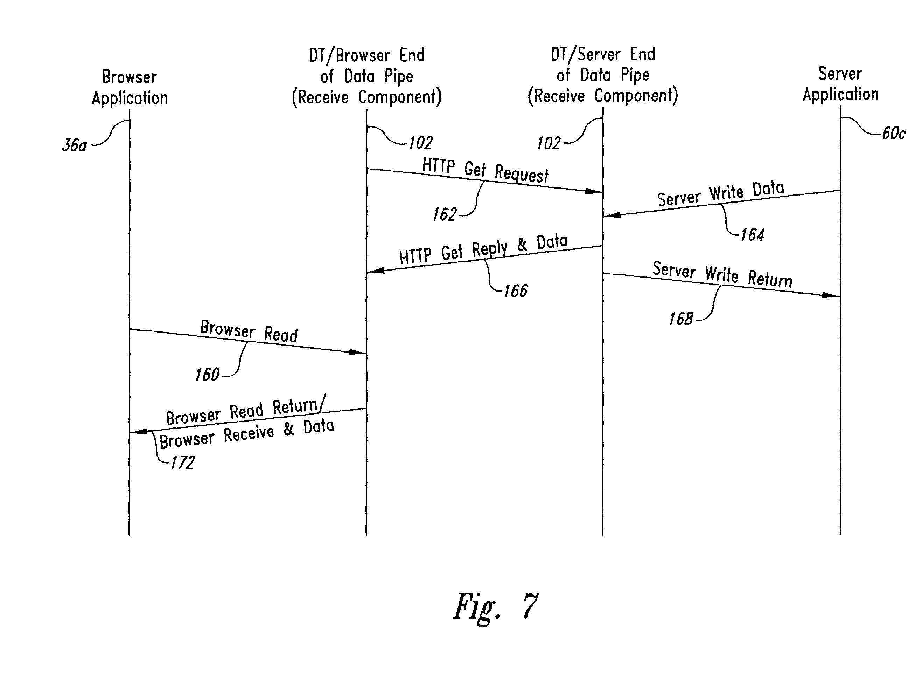

The downstream read-ahead implementation (Figure 7) differs from the downstream basic implementation (Figure 6) in that the downstream basic implementation relies on the Browser Read function to cause an HTTP Get Request, whereas the downstream read-ahead implementation issues an HTTP Get request independently of any Browser Reads. As a consequence of this difference between the downstream basic and downstream read-ahead implementations, the order of communication for the downstream basic implementation is 160, 162, 164, 166, 168, and 170 as shown in Figure 6, whereas the order of communication for the downstream read-ahead implementation is 162, 164, 166, 168, 160, and 172 as shown in Figure 7. With the downstream read-ahead implementation (Figure 7), data is sent from the associated server application 60c through the data pipe 102 of the associated instance of the DT/Server 60a on to the data pipe 102 of the associated instance of the DT/Browser 38a (particularly communications 162, 164, and 166) before the associated browser application 36a prepares to receive data by invoking the Browser Read (communication 160).

For the downstream read-ahead implementation (Figure 7), after the Browser Read (communication 160) occurs, the data pipe 102 of the associated instance of the DT/Browser 38a sends a Browser Read Return (synchronous) along with the data to the associated browser application 36a (communication 172). The downstream read-ahead implementation has an option for the associated instance of the DT/Browser 38a of using a Browser Receive (asynchronous) to send data to the associated browser application 36a instead of a Browser Read Return for communication 172. If the Browser Receive is used, then the Browser Read in communication 160 is unnecessary. The downstream basic implementation does not have the Browser Receive (asynchronous) option. When using the Browser Read (synchronous) option, if a Browser Read (communication 160) is not outstanding when data arrives at the associated instance of the DT/Browser 38a, the data is buffered. A buffer full condition will block subsequent HTTP Get Requests from the associated instance of DT/Browser 38a until for example, a Browser Read (communication 160) is received by the associated instance of the DT/Browser 38a.

Another version of the downstream read-ahead implementation includes an overlapped feature whereas the associated instance of the DT/Browser 38a may send additional HTTP Get Requests to the instance of the DT/Server 60a associated with the particular DT Session in one or more additional communications 162. The instance of the DT/Server 60a associated with the particular DT session queues each HTTP Get request until data is available from additional Server Write data calls (additional communications 164). This causes an overlapping of the communication wherein pipe sequence numbers are used to track the overlapping.

From the foregoing it will be appreciated that, although specific embodiments of the invention have been described herein for purposes of illustration, various modifications may be made without deviating from the spirit and scope of the invention. Accordingly, the invention is not limited except as by the appended claims.

## Claims

1. A duplex transport system for use with a client computer system and a server computer system, the client computer system and the server computer system communicatively linked to a network system, the duplex transport system comprising:
a browser program configured to run on the client computer system, the browser program having built-in features associated with communication protocols used by the duplex transport system;
one or more browser applications configured to run on the client computer system under control of the browser program;
one or more server applications configured to run on the server computer system;
a client component configured to run as one or more instances on the client computer system, each instance of the client component being communicatively linked to one of the browser applications;
a server component configured to run as one or more instances on the server computer system, each instance of the server component being communicatively linked to one of the server applications; and
the client component and the server component configured such that each of the one or more instances of the client component is associated with one of the one or more instances of the server component to form a session for each association, each session having a session identifier and one or more sub-sessions designated as one or more data pipes, each data pipe being a sub-session of a particular session, having a pipe identifier, and configured to provide two independent data paths of duplex data traffic between the browser application communicatively linked to the instance of the client component associated with the particular session and the server application communicatively linked to the instance of the server component associated with the particular session.

2. The duplex transport system of claim I wherein some of the built-in features of the browser program are associated with either Hypertext Transfer Protocol (HTTP), Hypertext Transfer Protocol Secure (HTTPS), Internet Protocol Secure (IPSEC), Secure Sockets Layer/Transport Layer Security (SSL/TLS), other request-response protocols, and/or the same and/or other protocols approved by communication standards organizations including but not limited to such standards organizations as the International Telecommunications Union (ITU) including such committees as the Telecommunications, and the Telecommunications Standards Sector committee, and the Internet Architecture Board including such task forces as the Internet Engineering Task Force and the Internet Research Task Force.

3. The duplex transport system of claim 1 wherein the client component and the server component is further configured such that the one or more data pipes of a session based on an association between an instance of the client component and an instance of the server component are configured to provide data paths of duplex data traffic comprising messages, each message containing one of the pipe identifiers.

4. The duplex transport system of claim 1 wherein the client component and the server component is further configured such that the one or more data pipes of a session based on an association between an instance of the client component and an instance of the server component are configured to provide data paths of duplex data traffic comprising messages that each contain one of the pipe identifiers identifying the data pipe and a pipe sequence number, the pipe sequence number identifying an order of the messages in the duplex data traffic associated with the data pipe.

5. The duplex transport system of claim 1 wherein the client component and the server component is further configured such that the one or more data pipes of a session based on an association between an instance of the client component and an instance of the server component are assigned the pipe identifier corresponding to the data pipe used by that message.

6. The duplex transport system of claim 1 wherein the client component and the server component is further configured such that the one or more data pipes of a session based on an association between an instance of the client component and an instance of the server component utilize the communication protocols associated with the built-in features of the browser program for the duplex data traffic.

7. The duplex transport system of claim 1 wherein the built-in features of the browser program involve one or more of the following: uniform resource locators (URLs), firewall/proxy navigation under Hypertext Transfer Protocol (HTTP), proxy configuration of the browser program, HTTP authentication, Transmission Control Protocol/Internet Protocol (TCP/IP), Secure Sockets Layer/Transport Layer Security (SSL/TLS), HTTP Secure (HTTPS), Internet Protocol Secure (IPSEC), and access to client certificates for use with security protocols.

8. A duplex transport system for use with a client computer system having a client application controlling a utility application, the client computer system communicatively linked to a network system and a server computer system having a server application, the server computer system communicatively linked to the network system, the duplex transport system comprising:
a client component configured to run as an instance on the client computer system, the instance of the client component being communicatively linked to one of the utility applications;
a server component configured to run as an instance on the server computer system, the instance of the server component being communicatively linked to one of the server applications; and
the client component and the server component configured such that the instance of the client component is associated with the instance of the server component in an association to form a session, the session having a session identifier and a sub-session designated as a data pipe, the data pipe having a pipe identifier and configured to provide two independent data paths of duplex data traffic between the utility application communicatively linked to the instance of the client component and the server application communicatively linked to the instance of the server component.

9. The duplex transport system of claim 8 wherein the client computer and the server component are further configured such that the duplex data traffic of the data pipe of the session formed from the association between the instance of the client component and the instance of the server component utilizes Hypertext Transfer Protocol (HTTP), Hypertext Transfer Protocol Secure (HTTPS), Internet Protocol Secure (IPSEC), Secure Sockets Layer/Transport Layer Security (SSL/TLS), other request-response protocols, and/or the same and/or other protocols approved by communication standards organizations including but not limited to such standards organizations as the International Telecommunications Union (ITU) including such committees as the Telecommunications, and the Telecommunications Standards Sector committee, and the Internet Architecture Board including such task forces as the Internet Engineering Task Force and the Internet Research Task Force.

10. The duplex transport system of claim 8 wherein the client computer and the server component are further configured such that the data pipe of the session formed from the association between the instance of the client component and the instance of the server component provides the data paths of duplex data traffic comprising messages that each contain the pipe identifier.

11. The duplex transport system of claim 8 wherein the client computer and the server component are further configured such that the data pipe of the session formed from the association between the instance of the client component and the instance of the server component data pipe is configured to provide data paths of duplex data traffic comprising messages that each contain the pipe identifier identifying the data pipe and a pipe sequence number, the pipe sequence number identifying an order of the messages in the duplex data traffic associated with the data pipe.

12. The duplex transport system of claim 8 wherein the client computer and the server component are further configured such that the session formed from the association between the instance of the client component and the instance of the server component further comprises a second data pipe being a second sub-session of the session, the second data pipe having a pipe identifier, configured to provide two additional independent data paths of a second duplex data traffic between the utility application and the server application, and being a secondary data pipe.

13. The duplex transport system of claim 8 wherein the client component is configured to run with a browser program.

14. The duplex transport system of claim 8 wherein the client component and the server component are further configured to run as second instances where the second instances of the client component and server component are associated in an association to form a second session having a session identifier.

15. A client computer system for use with a duplex transport system and a server computer system having a server application, the client computer system and the server computer system having a server component communicatively linked to a network system, the client computer system comprising:
a client computer;
a browser program configured to run on the client computer, the browser program having built-in features associated with communication protocols used by the duplex transport system;
one or more browser applications configured to run on the client computer under control of the browser program;
a client component configured to run as one or more instances on the client computer, each instance of the client component being communicatively linked to one of the browser applications, each instance of the client component configured to be associated with an instance of the server component to form a session with a session identifier, the client component further configured to be associated with one or more data pipes, each data pipe being a sub-session of one of the sessions formed between instances of the client component and instances of the server component, each data pipe having a pipe identifier, each data pipe configured to provide two independent data paths of duplex data traffic between the browser application communicatively linked to the instance of the client component associated with the session of the data pipe and the server application communicatively linked to the instance of the server component associated with the session of the data pipe.

16. The client computer system of claim 15 wherein some of the built-in features of the browser program are associated with either Hypertext Transfer Protocol (HTTP), Hypertext Transfer Protocol Secure (HTTPS), Internet Protocol Secure (IPSEC), Secure Sockets Layer/Transport Layer Security (SSL/TLS), other request-response protocols, and/or the same and/or other protocols approved by communication standards organizations including but not limited to such standards organizations as the International Telecommunications Union (ITU) including such committees as the Telecommunications, and the Telecommunications Standards Sector committee, and the Internet Architecture Board including such task forces as the Internet Engineering Task Force and the Internet Research Task Force.

17. The client computer system of claim 15 wherein the client component is further configured to form an association between an instance of the client component and an instance of the server component to form a session that has more than one data pipe, each data pipe having duplex data traffic of messages, each message being assigned a pipe identifier corresponding to the data pipe used by each message.

18. The client computer system of claim 15 wherein the client component is further configured to form an association between the instance of the client component and an instance of the server component to form a session having one or more data pipes that utilize the communication protocols associated with the built-in features of the browser program for duplex data traffic.

19. The client computer system of claim 15 wherein the built-in features of the browser program involve one or more of the following: uniform resource locators (URLs), firewall/proxy navigation under Hypertext Transfer Protocol (HTTP), proxy configuration of the browser program, HTTP authentication, Transmission Control Protocol/Internet Protocol (TCP/IP), Secure Sockets Layer/Transport Layer Security (SSL/TLS), HTTP Secure (HTTPS), Internet Protocol Secure (IPSEC), and access to client certificates for use with security protocols.

20. A server computer system for use with a duplex transport system and a client computer system, the client computer system having a client component and a browser application and the server computer system communicatively linked to a network system, the server computer system comprising:
a server computer;
one or more server applications configured to run on the server computer;
a server component configured to run as one or more instances on the server computer, each instance of the server component being communicatively linked to one of the server applications, each instance of the server component configured to be associated with an instance of the client component to form a session with a session identifier, the server component further configured to be associated with one or more data pipes, each data pipe being a sub-session of the session, each data pipe having a pipe identifier, each data pipe configured to provide two independent data paths of duplex data traffic between the browser application communicatively linked to the instance of the client component associated with the session of the data pipe and the server application communicatively linked to the instance of the server component associated with the session of the data pipe.

21. The server computer system of claim 20 wherein some of the built-in features of the browser program are associated with either Hypertext Transfer Protocol (HTTP), Hypertext Transfer Protocol Secure (HTTPS), Internet Protocol Secure (IPSEC), Secure Sockets Layer/Transport Layer Security (SSL/TLS), other request-response protocols, and/or the same and/or other protocols approved by communication standards organizations . including but not limited to such standards organizations as the International Telecommunications Union (ITU) including such committees as the Telecommunications, and the Telecommunications Standards Sector committee, and the Internet Architecture Board including such task forces as the Internet Engineering Task Force and the Internet Research Task Force

22. The server computer system of claim 20 wherein the server component is further configured to be associated with the client component in an association to form a session that has more than one data pipes having duplex data traffic where each message of the duplex data traffic is assigned the pipe identifier corresponding to the data pipe used by each message.

23. The server computer system of claim 20 wherein the server component is further configured to be associated with the client component in an association to form a session that has one or more data pipes that utilize the communication protocols associated with the built-in features of the browser program for the duplex data traffic.

24. The server computer system of claim 20 wherein the built-in features of the browser program involve one or more of the following: uniform resource locators (URLs), firewall/proxy navigation under Hypertext Transfer Protocol (HTTP), proxy configuration of the browser program, HTTP authentication, Transmission Control Protocol/Internet Protocol (TCP/IP), Secure Sockets Layer/Transport Layer Security (SSL/TLS), HTTP Secure (HTTPS), Internet Protocol Secure (IPSEC), and access to client certificates for use with security protocols.

25. A method for establishing duplex communication between a browser application running under control of a browser program on a client computer system and a server application running on a server computer system over a network, the method comprising:
registering a session listener callback function for the server application with a server component running on the server computer system;
initiating through the browser application creation of an instance of a client component to run on the client computer system;
establishing through the instance of the client component communication over the network with the server computer system;
based upon establishing communication between the client component and the server computer system, creating an instance of a server component to run on the server computer system;
notifying the server application through the session listener callback function of the establishment of the instance of the server component;
establishing an association between the instance of the client component and the instance of the server component as a session and assigning a session identifier to the session;
designating a sub-session of the session as a data pipe of duplex data traffic between the browser application and the server application; and
assigning a pipe identifier to the data pipe to be used by messages being sent through the data pipe.

26. The method of claim 25, further comprising:
registering a pipe listener callback function with the instance of the server component;
creating an instance of a second data pipe through the browser application from the instance of the client component and the instance of the server component; and
notifying the server application through the pipe listener callback function of creation of the second data pipe.

27. A method of transmitting data from a client computer system to a server computer system, the method comprising:
invoking a Read function through a server application on the server computer system, the server application associated with a session between an instance of a client component running on the client computer system and an instance of a server component running on the server computer system;
presenting a data buffer of the server application to an upstream component of a data pipe associated with the instance of the server component;
writing data from a browser application on the client computer system to an upstream component of a data pipe associated with the instance of the client component;
sending an Hypertext Transfer Protocol (HTTP) Post along with data to the instance of the server component; and
sending from the instance of the server component either a Server Read Return or a Server Receive callback along with the data to the server application.

28. The method of claim 27, further comprising:
sending an HTTP Post Reply to the instance of the client component; and
sending a Browser Write Return to the browser application.

29. A method of transmitting data from a server computer system to a client computer system, the method comprising:
invoking a Browser Read function through a browser application on the client computer system, the browser application associated with a session between an instance of a client component running on the client computer system and an instance of a server component running on the server computer system;
presenting a data buffer of the browser application to a downstream component of a data pipe associated with the instance of the client component;
writing data from a server application to a downstream component of a data pipe associated with the instance of the server component;
sending an Hypertext Transport Protocol (HTTP) Get Request from the instance of the client component to the instance of the server component;
if no data is available from the instance of the server component in a predetermined amount of time, sending an HTTP Get Reply with no data from the instance of the server component to the instance of the client component;
if a server application associated with the session sends data to the instance of the server component before or within a predetermined time after the HTTP Get Request is sent from the instance of the client component to the instance of the server component, then sending an HTTP Get Reply with data from the instance of the server component to the instance of the client component;
sending a Server Write Return from the instance of the server component to the server application to return control to the server application; and
sending a Browser Read Return from the instance of the client component to the browser application to return control to the browser application along with sending the data from the instance of the client component to the browser application.

30. The method of claim 29 wherein the invoking the Browser Read and sending the Browser Read Return is replaced by sending a Browser Receive from the instance of the client component to the browser application.
